# EUROPEAN PATENT APPLICATION

(11) **EP 4 832 467 A1**
(43) Date of publication of application: **28.10.2026**
(21) Application number: 26173139.2
(22) Date of filing: 17.04.2026
(51) Int. Cl.: H04N 1/00

(54) **IMAGE FORMING APPARATUS AND RECORDING METHOD THAT, WHEN OPTIONAL DEVICE WITH RESTORED SETTINGS IS INSTALLED IN OTHER IMAGE FORMING APPARATUS, ALLOW OTHER IMAGE FORMING APPARATUS TO RECOGNIZE RESTORATION DATE AND TIME OF SETTING INFORMATION**

(30) Priority: 23.04.2025 JP 2025071050
(71) Applicant: KYOCERA Document Solutions Inc., Osaka-shi, Osaka 540-8585 (JP)
(72) Inventor: Ogasawara, Hideyuki, Osaka-shi, 540-8585 (JP)
(74) Representative: Plougmann Vingtoft a/s

(57) **Abstract**

An optional device that stores setting information is connected to an image forming apparatus. The image forming apparatus includes a backup processing portion, a restoration processing portion, and a first recording processing portion. The backup processing portion backs up the setting information of the optional device connected to the image forming apparatus in a storage portion provided outside the optional device. The restoration processing portion restores the setting information corresponding to the optional device connected to the image forming apparatus that has been backed up in advance by the backup processing portion to the optional device. The first recording processing portion records the restoration date and time when the setting information is restored by the restoration processing portion in the optional device to which the setting information is restored.

## Description

### BACKGROUND

The present disclosure relates to an image forming apparatus and a recording method.

An image forming system is known that includes an image forming apparatus such as a multifunction peripheral and an optional device such as a post-processing device. In addition, an image forming apparatus is known that backs up setting information of the image forming system stored in the image forming apparatus to an external storage device, and when the image forming apparatus is replaced, can restore the backed-up setting information to the image forming apparatus after replacement.

### SUMMARY

An image forming apparatus according to one aspect of the present disclosure is connected to an optional device that stores setting information. The image forming apparatus includes a backup processing portion, a restoration processing portion, and a first recording processing portion. The backup processing portion backs up the setting information of the optional device connected to the image forming apparatus in a storage portion provided outside the optional device. The restoration processing portion restores the setting information corresponding to the optional device connected to the image forming apparatus that has been backed up in advance by the backup processing portion to the optional device. The first recording processing portion records the restoration date and time when the setting information is restored by the restoration processing portion in the optional device to which the setting information is restored.

A recording method according to another aspect of the present disclosure is executed by an image forming apparatus to which an optional device that stores setting information is connected. The recording method includes a backup step, a restoration step, and a recording step. In the backup step, the setting information of the optional device connected to the image forming apparatus is backed up in a storage portion provided outside the optional device. In the restoration step, the setting information corresponding to the optional device connected to the image forming apparatus that has been backed up in advance by the backup step is restored to the optional device. In the recording step, a restoration date and time when the setting information is restored by the restoration step is recorded in the optional device to which the setting information is restored.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a block diagram showing a configuration of an image forming system including an image forming apparatus of an embodiment according to the present disclosure.
FIG. 2 is a block diagram showing a configuration of an image forming apparatus of an embodiment according to the present disclosure.
FIG. 3 is a flowchart showing an example of a backup control process executed by an image forming apparatus of an embodiment according to the present disclosure.
FIG. 4 is a flowchart showing an example of a restoration control process executed by an image forming apparatus of an embodiment according to the present disclosure.

### DETAILED DESCRIPTION

Hereinafter, embodiments according to the present disclosure will be described with reference to the drawings. Note that the following embodiments are examples of specific embodiments according the present disclosure, and do not limit the technical scope of the present disclosure.

### [Configuration of Image Forming System 100]

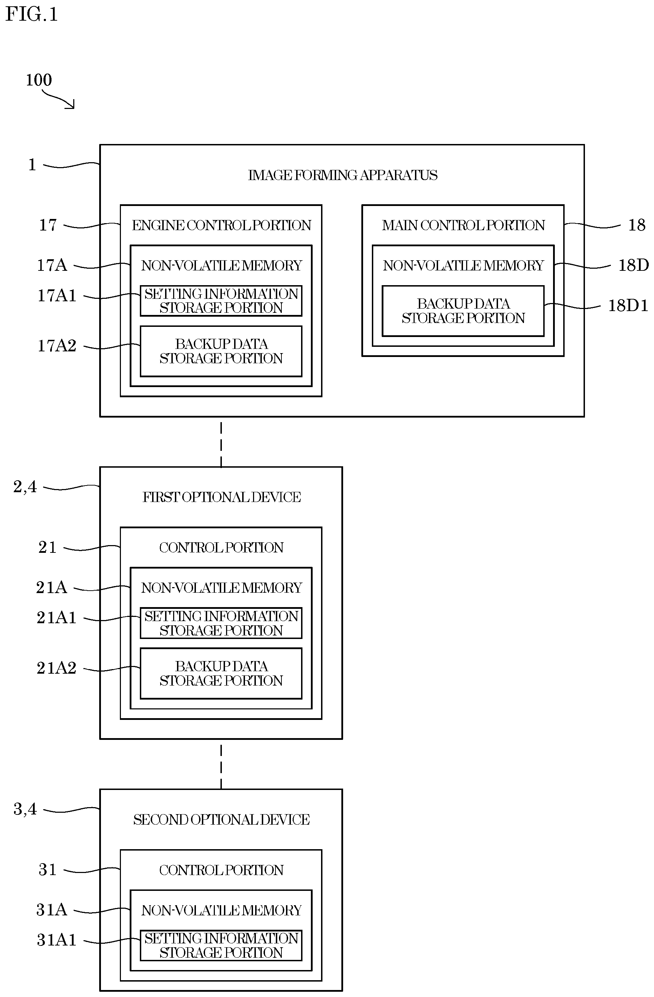

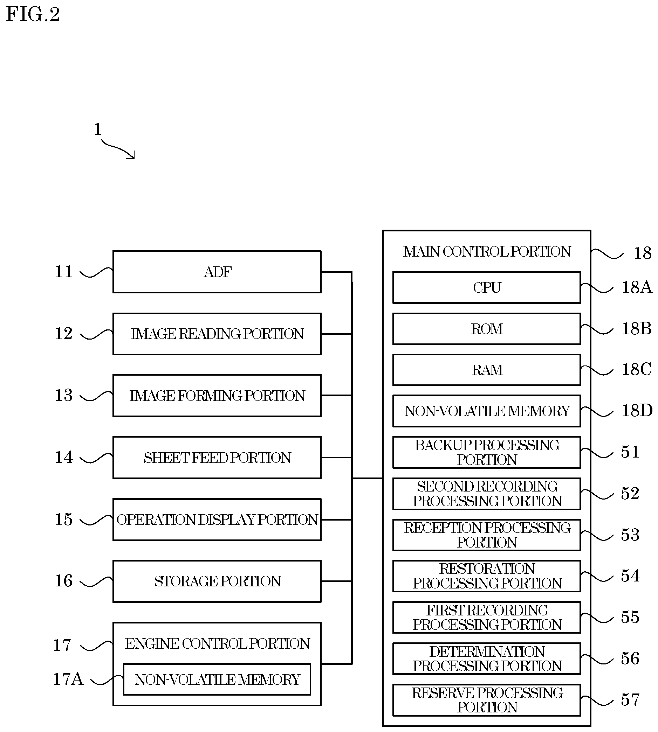

First, with reference to FIGS. 1 and 2, a configuration of an image forming system 100 including an image forming apparatus 1 according to an embodiment according to the present disclosure will be described. Note that in FIG. 1, communication paths between components of the image forming system 100 are indicated by dashed lines.

As shown in FIG. 1, the image forming system 100 includes an image forming apparatus 1 and two optional devices 4 connected to the image forming apparatus 1.

One of the two optional devices 4 is a first optional device 2 that is communicably connected to the image forming apparatus 1. The other of the two optional devices 4 is a second optional device 3 that is communicably connected to the image forming apparatus 1 via the first optional device 2. Note that the number of optional devices 4 connected to the image forming apparatus 1 does not have to be limited to two.

The image forming apparatus 1 is a multifunction peripheral having multiple functions, such as a scanning function for reading an image from a document, a printing function for forming an image on a sheet based on image data, a fax function, and a copy function. Note that the image forming apparatus 1 is not limited to a multifunction peripheral, but may be any device having the printing function, such as a printer, a fax machine, or a copier.

As shown in FIG. 2, the image forming apparatus 1 includes an auto document feeder (ADF) 11, an image reading portion 12, an image forming portion 13, a sheet feed portion 14, an operation display portion 15, a storage portion 16, an engine control portion 17, and a main control portion 18.

The ADF 11 conveys a document whose image is to be read by the image reading portion 12. The ADF 11 includes a document setting portion, a plurality of conveying rollers, a document holder, and a sheet discharge tray.

The image reading portion 12 implements the scanning function. The image reading portion 12 includes a document table, a light source, a plurality of mirrors, an optical lens, and a charge coupled device (CCD). The image reading portion 12 reads an image from a document conveyed by the ADF 11, and outputs image data including the read image. In addition, the image reading portion 12 also reads an image from a document placed on the document table and outputs image data including the read image.

The image forming portion 13 implements the printing function. For example, the image forming portion 13 forms an image on a sheet by an electrophotographic method. The image forming portion 13 includes a plurality of image forming units corresponding to a plurality of printing colors, a laser scanning unit, an intermediate transfer belt, a secondary transfer device, a fixing device, and a sheet discharge tray. The image forming portion 13 forms a color or monochrome image based on the image data output from the image reading portion 12. In addition, the image forming portion 13 also forms a color or monochrome image based on image data input from an external information processing apparatus. Note that the image forming portion 13 may form an image on a sheet by a method other than the electrophotographic method, such as an inkjet method.

The sheet feed portion 14 supplies sheets to the image forming portion 13. The sheet feed portion 14 includes a sheet feed cassette and a plurality of conveying rollers. The image forming portion 13 forms an image on a sheet supplied from the sheet feed portion 14.

The operation display portion 15 is a user interface of the image forming system 100. The operation display portion 15 includes a display portion and an operation portion. The display portion displays various types of information in response to control instructions from the main control portion 18. For example, the display portion is a display device such as a liquid crystal display. The operation portion inputs various types of information to the main control portion 18 in response to user operations. For example, the operation portion is an operation device including operation keys and a touch panel.

The storage portion 16 is a non-volatile storage device. For example, the storage portion 16 is a solid state drive (SSD) or a hard disk drive (HDD). Note that the storage portion 16 may be a non-volatile memory such as a flash memory.

The engine control portion 17 controls the ADF 11, the image reading portion 12, the image forming portion 13, and the sheet feed portion 14. For example, the engine control portion 17 is configured with electronic circuits such as integrated circuits (ASIC, DSP). As shown in FIG. 2, the engine control portion 17 includes a non-volatile memory 17A. The non-volatile memory 17A is a non-volatile storage device such as an EEPROM.

As shown in FIG. 1, the non-volatile memory 17A includes a setting information storage portion 17A1 used to store setting information of the image forming apparatus 1 (hereinafter referred to as "first setting information"). The first setting information is used by the engine control portion 17 to control each portion of the image forming apparatus 1. More specifically, the first setting information includes various types of setting values related to functions of the image forming apparatus 1 that are set automatically or manually (by user operation on the operation display portion 15). For example, the first setting information includes various setting values related to the scanning function, various setting values related to the printing function, various setting values related to the fax function, and various setting values related to the copy function. Note that the first setting information may include information indicating the number of times each portion of the image forming apparatus 1 operates, such as the number of times the image forming portion 13 operates. In addition, the first setting information may be rewritable information among information that is set or registered in advance in the image forming apparatus 1.

The main control portion 18 controls the image forming system 100 in an overall manner. As shown in FIG. 2, the main control portion 18 includes a CPU 18A, a ROM 18B, a RAM 18C, and a non-volatile memory 18D. The CPU 18A is a processor that executes various types of calculation processes. The ROM 18B is a non-volatile storage device that stores in advance information such as control programs for causing the CPU 18A to execute various types of processes. The RAM 18C is a volatile or non-volatile storage device used as a temporary storage memory (work area) for various types of processes executed by the CPU 18A. The non-volatile memory 18D is a non-volatile storage device similar to the non-volatile memory 17A. The CPU 18A performs overall control of the image forming system 100 by executing various types of control programs stored in advance in the ROM 18B.

The first optional device 2 is a function expansion unit that expands the functions of the image forming apparatus 1. More specifically, the first optional device 2 is a post-processing device that executes a predetermined first post-processing on a sheet output from the image forming apparatus 1 after an image has been formed thereon. The first post-processing is, for example, a stapling process of stapling a plurality of sheets. Note that the first optional device 2 may be a sheet feed unit that supplies sheets to the image forming portion 13 of the image forming apparatus 1. In addition, the image forming system 100 may include a plurality of first optional devices 2 each having a different function.

As shown in FIG. 1, the first optional device 2 includes a control portion 21 that controls the first optional device 2. For example, the control portion 21 is configured with electronic circuits such as integrated circuits (ASIC, DSP). As shown in FIG. 1, the control portion 21 includes a non-volatile memory 21A. The non-volatile memory 21A is a non-volatile storage device similar to the non-volatile memory 17A.

The first optional device 2 holds the setting information of the first optional device 2 (hereinafter referred to as "second setting information"). As shown in FIG. 1, the non-volatile memory 21A includes a setting information storage portion 21A1 used to store the second setting information. The second setting information is used by the control portion 21 to control each portion of the first optional device 2. More specifically, the second setting information includes various types of setting values related to the functions of the first optional device 2, which are set automatically or manually (by user operation on the operation display portion 15). For example, the second setting information includes various setting values related to a stapling function. Note that the second setting information may include information indicating a number of operations of the first optional device 2, such as a number of times a stapling process is executed. In addition, the second setting information may be rewritable information among information that is set or registered in advance in the first optional device 2.

The second optional device 3 is a function expansion unit that expands the functions of the first optional device 2. More specifically, the second optional device 3 is a function expansion unit that can execute a second post-processing that is different from the first post-processing. The second post-processing includes a punching process for punching holes in sheets, a folding process for folding sheets, a bookbinding process for binding a plurality of sheets together, and a sorting process for sorting sheets. Note that in the image forming system 100, a plurality of second optional devices 3 having different functions may be connected to one first optional device 2. In addition, in the image forming system 100 having a plurality of first optional devices 2, one or a plurality of second optional devices 3 may be connected to each of the first optional devices 2.

As shown in FIG. 1, the second optional device 3 includes a control portion 31 that controls the second optional device 3. For example, the control portion 31 is configured with electronic circuits such as integrated circuits (ASIC, DSP). As shown in FIG. 1, the control portion 31 includes a non-volatile memory 31A. The non-volatile memory 31A is a non-volatile storage device similar to the non-volatile memory 17A.

The second optional device 3 holds the setting information of the second optional device 3 (hereinafter referred to as "third setting information"). As shown in FIG. 1, the non-volatile memory 31A includes a setting information storage portion 31A1 used to store the third setting information. The third setting information is used by the control portion 31 to control each portion of the second optional device 3. More specifically, the third setting information includes various types of setting values related to the functions of the second optional device 3, which are set automatically or manually (by user operation on the operation display portion 15). For example, the third setting information includes various setting values related to a punching function. The third setting information may include information indicating the number of operations of the second optional device 3, such as the number of times the punching process is executed. In addition, the third setting information may be rewritable information among information that is set or registered in advance in the second optional device 3.

It is conceivable that the image forming apparatus can back up the setting information of the optional device 4 held in the optional device 4 to a storage device external to the optional device 4, and when the optional device 4 is replaced, restore the backed-up setting information to the replaced optional device 4.

Here, in a case in which the optional device 4 whose setting information has been restored by the image forming apparatus is attached to another image forming apparatus, the other image forming apparatus will not be able to recognize the date and time when the setting information stored in the attached optional device 4 was restored, and will not be able to determine whether or not to execute the restoration.

In contrast, in the image forming apparatus 1 of an embodiment according to the present disclosure, as described below, in a case in which the optional device 4 in which the setting information has been restored is attached to another image forming apparatus, it is possible to enable the other image forming apparatus to recognize the date and time when the setting information was restored.

### [Functional Configuration of Main Control Portion 18]

Next, a functional configuration of the main control portion 18 will be described with reference to FIGS. 1 and 2.

As shown in FIG. 2, the main control portion 18 includes a backup processing portion 51, a second recording processing portion 52, a reception processing portion 53, a restoration processing portion 54, a first recording processing portion 55, a determination processing portion 56, and a reserve processing portion 57.

More specifically, the ROM 18B of the main control portion 18 stores in advance an operation control program for causing the CPU 18A to function as each of the above-mentioned processing portions. The CPU 18A executes the operation control program stored in the ROM 18B to function as each of the above-mentioned processing portions.

Note that the operation control program may be recorded on a computer-readable recording medium such as a CD, DVD, or flash memory, and may be read from the recording medium and stored in a non-volatile storage device such as the storage portion 16. In addition, some or all of the processing portions included in the main control portion 18 may be configured with electronic circuits. Moreover, the operation control program may also be a program for causing a plurality of processors to function as each of the processing portions included in the main control portion 18.

The backup processing portion 51 backs up the setting information of the optional device 4 connected to the image forming apparatus 1 in a storage portion provided outside the optional device 4.

In addition, the backup processing portion 51 backs up the setting information of the image forming apparatus 1 held in the engine control portion 17 in the non-volatile memory 18D of the main control portion 18.

For example, when a predetermined execution timing arrives, the backup processing portion 51 executes a third backup process that backs up the third setting information stored in the non-volatile memory 31A of the second optional device 3.

In the third backup process, the third setting information stored in the non-volatile memory 31A of the second optional device 3 is transferred to the first optional device 2 that is communicably connected to the second optional device 3. In addition, in the third backup process, the third setting information transferred from the second optional device 3 is backed up in the first optional device 2. More specifically, in the third backup process, the third setting information (backup data) transferred from the second optional device 3 is stored in a backup data storage portion 21A2 (see FIG. 1) in place of existing data stored in the backup data storage portion 21A2. Note that the backup data storage portion 21A2 is a storage area provided in advance in the non-volatile memory 21A for backup purposes.

In addition, after executing the third backup process, the backup processing portion 51 executes a second backup process for backing up the second setting information and the like stored in the non-volatile memory 21A of the first optional device 2.

In the second backup process, the second setting information and the third setting information stored in the non-volatile memory 21A of the first optional device 2 are transferred to the engine control portion 17. In addition, in the second backup process, the engine control portion 17 backs up the second setting information and the third setting information transferred from the first optional device 2. More specifically, in the second backup process, both the second setting information and the third setting information (backup data) transferred from the first optional device 2 are stored in a backup data storage portion 17A2 (see FIG. 1) in place of the existing data stored in the backup data storage portion 17A2. Note that the backup data storage portion 17A2 is a storage area provided in advance in the non-volatile memory 17A for backup purposes.

In addition, after the second backup process is executed, the backup processing portion 51 also executes a first backup process to back up the first setting information and the like stored in the non-volatile memory 17A of the engine control portion 17.

In the first backup process, the first setting information, the second setting information, and the third setting information stored in the non-volatile memory 17A of the engine control portion 17 are transferred to the main control portion 18. Moreover, in the first backup process, the main control portion 18 backs up the first setting information, the second setting information, and the third setting information transferred from the engine control portion 17. More specifically, in the first backup process, all of the first setting information, the second setting information, and the third setting information (backup data) transferred from the engine control portion 17 are stored in a backup data storage portion 18D1 (see FIG. 1), replacing the existing data stored in the backup data storage portion 18D1. Note that the backup data storage portion 18D1 is a storage area provided in advance in the non-volatile memory 18D for backup purposes.

In the second backup process, the second setting information of the first optional device 2 obtained from the first optional device 2 is stored in the backup data storage portion 17A2 (an example of the storage portion and an example of a first storage portion according to the present disclosure) of the engine control portion 17 and the backup data storage portion 18D1 of the main control portion 18. In addition, in the third backup process, the third setting information of the second optional device 3 obtained from the second optional device 3 is stored in the backup data storage portion 21A2 (an example of the storage portion and also an example of a second storage portion according to the present disclosure) of the first optional device 2 that is communicatively connected to the second optional device 3, the backup data storage portion 17A2 of the engine control portion 17, and the backup data storage portion 18D1 of the main control portion 18.

For example, the execution timing is a timing that occurs at a preset cycle. In addition, the execution timing may also be timing at which the operation display portion 15 receives a predetermined user operation.

The second recording processing portion 52 records the date and time when the backup processing portion 51 backs up the setting information.

For example, when the third setting information held in the second optional device 3 is backed up by the backup processing portion 51 to the backup data storage portion 21A2 of the first optional device 2 connected to the second optional device 3, the second recording processing portion 52 records the backup date and time of the third setting information in the first optional device 2. For example, the second recording processing portion 52 records the backup date and time of the third setting information in a predetermined third backup date and time recording area in the non-volatile memory 21A. Note that the location where the backup date and time of the third setting information in the first optional device 2 is recorded is not limited to the third backup date and time recording area, but may be any non-volatile storage portion provided in the first optional device 2.

In addition, in a case in which the second setting information and the like held in the first optional device 2 is backed up by the backup processing portion 51 to the backup data storage portion 17A2 of the engine control portion 17, the second recording processing portion 52 records the backup date and time of the second setting information and the like in the engine control portion 17. For example, the second recording processing portion 52 records the backup date and time of the second setting information and the like in a predetermined second backup date and time recording area in the non-volatile memory 17A. Note that the location where the backup date and time of the second setting information and the like in the engine control portion 17 is recorded is not limited to the second backup date and time recording area, but may be any non-volatile storage portion provided in the engine control portion 17.

In addition, in a case in which the first setting information and the like held in the engine control portion 17 is backed up by the backup processing portion 51 to the backup data storage portion 18D1 of the main control portion 18, the second recording processing portion 52 records the backup date and time of the first setting information and the like in the main control portion 18. For example, the second recording processing portion 52 records the backup date and time of the first setting information and the like in a predetermined first backup date and time recording area in the non-volatile memory 18D. Note that the location where the backup date and time of the first setting information and the like in the main control portion 18 is recorded is not limited to the first backup date and time recording area, but may be any non-volatile storage portion provided in the main control portion 18.

Note also that, in a case in which the third backup process, the second backup process, and the first backup process are executed sequentially by the backup processing portion 51, the second recording processing portion 52 may record the date and time of backup of the setting information by the backup processing portion 51 in a predetermined first storage area in the storage portion 16.

The reception processing portion 53 receives a designation operation for designating either the optional device 4 connected to the image forming apparatus 1 or the engine control portion 17. The designation operation is an operation for designating a restoration target for restoring the setting information.

For example, in a case in which a predetermined calling operation is received by the operation display portion 15, the reception processing portion 53 causes the operation display portion 15 to display a designation operation receiving screen used for the designation operation.

Here, on the designation operation receiving screen, restorable devices among of the optional devices 4 connected to the image forming apparatus 1 and the engine control portion 17, whose setting information has been stored by the backup processing portion 51 in the backup data storage portion 21A2, the backup data storage portion 17A2, or the backup data storage portion 18D1, is presented in an identifiable manner. The restorable devices are the optional devices 4 connected to the image forming apparatus 1 and the engine control portion 17, and are devices for which backup of the setting information has already been executed. In addition, the designation operation receiving screen receives the designation operation for designating one of the presented restorable devices.

The restoration processing portion 54 restores the setting information corresponding to the optional devices 4 connected to the image forming apparatus 1 that have been backed up in advance by the backup processing portion 51 to the optional devices 4.

In addition, the restoration processing portion 54 also restores the setting information of the image forming apparatus 1 that has been backed up in advance by the backup processing portion 51 to the engine control portion 17.

More specifically, when the designation operation is received by the reception processing portion 53, the restoration processing portion 54 restores the setting information corresponding to the designated device designated by the designation operation to the designated device, the setting information was previously backed up by the backup processing portion 51 to the backup data storage portion 21A2, the backup data storage portion 17A2, or the backup data storage portion 18D1.

For example, in a case in which the designated device is the engine control portion 17, the restoration processing portion 54 executes a first restoration process to restore the first setting information.

In the first restoration process, the first setting information stored in the backup data storage portion 18D1 of the main control portion 18 is transferred to the engine control portion 17. In addition, in the first restoration process, the first setting information transferred from the main control portion 18 is restored to the engine control portion 17. In other words, in the first restoration process, the first setting information (backup data) transferred from the main control portion 18 is stored in the setting information storage portion 17A1 in place of the existing first setting information stored in the setting information storage portion 17A1.

In addition, in a case in which the designated device is the first optional device 2, the restoration processing portion 54 executes a second restoration process to restore the second setting information corresponding to the first optional device 2.

In the second restoration process, the second setting information stored in the backup data storage portion 17A2 of the engine control portion 17, which corresponds to the designated device, is transferred to the designated device. In addition, in the second restoration process, the second setting information transferred from the engine control portion 17 is restored to the designated device. In other words, in the second restoration process, the second setting information (backup data) transferred from the engine control portion 17 is stored in the setting information storage portion 21A1, replacing the existing second setting information stored in the setting information storage portion 21A1. Thus, it is possible to shorten the transfer time of the second setting information compared to a configuration in which the second setting information corresponding to the designated device among the second setting information stored in the backup data storage portion 18D1 of the main control portion 18 is transferred to the designated device.

In addition, in a case in which the designated device is the second optional device 3, the restoration processing portion 54 executes a third restoration process to restore the third setting information corresponding to the second optional device 3.

In the third restoration process, the third setting information corresponding to the designated device among the third setting information stored in the backup data storage portion 21A2 of the first optional device 2 that is communicatively connected to the designated device is transferred to the designated device. In addition, in the third restoration process, the third setting information transferred from the first optional device 2 is restored to the designated device. In other words, in the third restoration process, the third setting information (backup data) transferred from the first optional device 2 is stored in the setting information storage portion 31A1, replacing the existing third setting information stored in the setting information storage portion 31A1. Thus, it is possible to shorten the transfer time of the third setting information compared to a configuration in which the third setting information corresponding to the designated device among the third setting information stored in the backup data storage portion 18D1 of the main control portion 18 or the backup data storage portion 17A2 of the engine control portion 17 is transferred to the designated device.

Note that in the image forming system 100, in a case in which both the first optional device 2 and the second optional device 3 that is communicatively connected to the first optional device 2 are replaced at the same time, no data will be stored in the backup data storage portion 21A2 of the replaced first optional device 2. In this case, the restoration processing portion 54 may restore the third setting information stored in the backup data storage portion 17A2 of the engine control portion 17 to the second optional device 3 after replacement.

The first recording processing portion 55 records the date and time when the setting information is restored by the restoration processing portion 54 in the optional device 4 or the engine control portion 17 where the setting information is restored.

For example, in a case in which the restoration processing portion 54 restores the third setting information to the second optional device 3, the first recording processing portion 55 records the date and time when the third setting information is restored to the second optional device 3. For example, the first recording processing portion 55 records the restoration date and time of the third setting information in a predetermined third restoration date and time recording area in the non-volatile memory 31A. Note that the location where the restoration date and time of the third setting information in the second optional device 3 is recorded is not limited to the third restoration date and time recording area, but may be any non-volatile storage portion provided in the second optional device 3.

In addition, in a case in which the restoration processing portion 54 restores the second setting information to the first optional device 2, the first recording processing portion 55 records the date and time when the second setting information is restored to the first optional device 2. For example, the first recording processing portion 55 records the restoration date and time of the second setting information in a predetermined second restoration date and time recording area in the non-volatile memory 21A. Note that the location where the restoration date and time of the second setting information in the first optional device 2 is recorded is not limited to the second restoration date and time recording area, but may be any non-volatile storage portion provided in the first optional device 2.

In addition, in a case in which the restoration processing portion 54 restores the first setting information to the engine control portion 17, the first recording processing portion 55 records the date and time when the first setting information is restored to the engine control portion 17. For example, the first recording processing portion 55 records the restoration date and time of the first setting information in a predetermined first restoration date and time recording area in the non-volatile memory 17A. Note that the location where the restoration date and time of the first setting information in the engine control portion 17 is recorded is not limited to the first restoration date and time recording area, but may be any non-volatile storage portion provided in the engine control portion 17.

Note that in a case in which the restoration processing portion 54 restores the setting information corresponding to the designated device to the designated device, the first recording processing portion 55 may record the restoration date and time of the setting information in a predetermined second storage area in the storage portion 16.

The determination processing portion 56 determines whether the last restoration date and time of the setting information recorded in the optional device 4 is later than the backup date and time of the setting information to be restored to the optional device 4 before the restoration processing portion 54 restores the setting information to the optional device 4.

In addition, the determination processing portion 56 determines whether the last restoration date and time of the setting information recorded in the engine control portion 17 is later than the backup date and time of the setting information to be restored to the engine control portion 17 before the restoration processing portion 54 restores the setting information to the engine control portion 17.

For example, in a case in which the designated device is the second optional device 3, the determination processing portion 56 determines whether the last restoration date and time of the third setting information recorded in the second optional device 3 is later than the backup date and time of the third setting information to be restored to the second optional device 3, based on the recorded contents of the third restoration date and time recording area of the second optional device 3 and the recorded contents of the third backup date and time recording area of the first optional device 2 that is communicatively connected to the second optional device 3. Note that in a case in which the restoration date and time is not recorded in the third restoration date and time recording area of the second optional device 3, the determination processing portion 56 simply determines that the last restoration date and time of the third setting information recorded in the second optional device 3 is not later than the backup date and time of the third setting information to be restored to the second optional device 3.

In addition, in a case in which the designated device is the first optional device 2, the determination processing portion 56 determines whether the last restoration date and time of the second setting information recorded in the first optional device 2 is later than the backup date and time of the second setting information to be restored to the first optional device 2, based on the recorded contents of the second restoration date and time recording area of the first optional device 2 and the recorded contents of the second backup date and time recording area of the engine control portion 17. Note that, in a case in which the restoration date and time is not recorded in the second restoration date and time recording area of the first optional device 2, the determination processing portion 56 simply determines that the last restoration date and time of the second setting information recorded in the first optional device 2 is not later than the backup date and time of the second setting information to be restored to the first optional device 2.

In addition, in a case in which the designated device is the engine control portion 17, the determination processing portion 56 determines whether the last restoration date and time of the first setting information recorded in the engine control portion 17 is later than the backup date and time of the first setting information to be restored to the engine control portion 17, based on the recorded contents of the first restoration date and time recording area of the engine control portion 17 and the recorded contents of the first backup date and time recording area of the main control portion 18. Note that, in a case in which the restoration date and time is not recorded in the first restoration date and time recording area of the engine control portion 17, the determination processing portion 56 simply determines that the last restoration date and time of the first setting information recorded in the engine control portion 17 is not later than the backup date and time of the first setting information to be restored to the engine control portion 17.

In a case in which the determination processing portion 56 determines that the last restoration date and time of the setting information recorded in the optional device 4 is later than the backup date and time of the setting information to be restored to the optional device 4, the reserve processing portion 57 reserves the restoration of the setting information to the optional device 4 by the restoration processing portion 54.

In addition, in a case in which the determination processing portion 56 determines that the last restoration date and time of the setting information recorded in the engine control portion 17 is later than the backup date and time of the setting information to be restored to the engine control portion 17, the reserve processing portion 57 reserves the restoration of the setting information to the engine control portion 17 by the restoration processing portion 54.

For example, in a case in which the restoration of the setting information to the designated device is reserved, the reserve processing portion 57 displays on the operation display portion 15 a selection operation receiving screen used to receive a selection operation to select whether or not to perform the restoration. The selection operation receiving screen includes a message indicating that the last restoration date and time of the setting information recorded in the designated device is later than the backup date and time of the setting information to be restored to the designated device.

The restoration processing portion 54 executes restoration of the setting information to the designated device when the selection operation for selecting execution of restoration is received on the selection operation receiving screen. In addition, in a case in which the selection operation for selecting not to execute the restoration is received on the selection operation receiving screen, the restoration processing portion 54 cancels the restoration of the setting information to the designated device.

### [Backup Control Process]

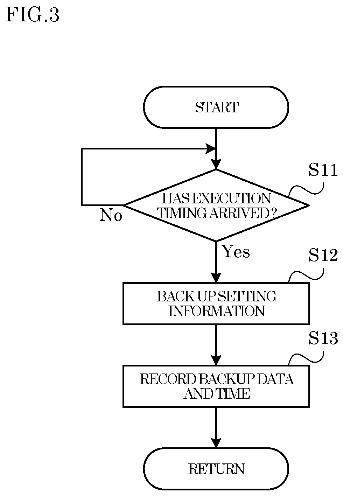

Hereinafter, with reference to FIG. 3, an example of a procedure of the backup control process executed by the main control portion 18 in the image forming apparatus 1 will be described, along with a part of the recording method according to the present disclosure. Here, steps S11, S12, and so on represent numbers of processing procedures (steps) executed by the main control portion 18.

### <Step S11>

First, in step S11, the main control portion 18 determines whether the execution timing has arrived.

Here, when the main control portion 18 determines that the execution timing has arrived (YES in S11), the main control portion 18 moves the processing to step S12. In addition, when the execution timing has not yet arrived (NO in S11), the main control portion 18 waits for the execution timing to arrive in step S11.

### <Step S12>

In step S12, the main control portion 18 backs up the first setting information, the second setting information, and the third setting information.

More specifically, the main control portion 18 sequentially executes the third backup process, the second backup process, and the first backup process. The process of step S12 is an example of a backup step according to the present disclosure, and is executed by the backup processing portion 51 of the main control portion 18.

### <Step S13>

In step S13, the main control portion 18 records the date and time of the process in step S12 (backup date and time). The process of step S13 is executed by the second recording processing portion 52 of the main control portion 18.

More specifically, the main control portion 18 records the date and time of the process of step S12 in the third backup date and time recording area of the first optional device 2. In addition, the main control portion 18 records the date and time of the process of step S12 in the second backup date and time recording area of the engine control portion 17. Moreover, the main control portion 18 also records the date and time of the process of step S12 in the first backup date and time recording area.

Here, in the image forming apparatus 1, when the third setting information of the second optional device 3 is backed up to the first optional device 2 connected to the second optional device 3, the backup date and time of the third setting information is recorded in the first optional device 2. Thus, it is possible that in a case in which both the first optional device 2 and the second optional device 3 connected to the first optional device 2 are simultaneously attached to another image forming apparatus, the other image forming apparatus can recognize the backup date and time of the third setting information backed up in the first optional device 2.

### [Restoration Control Process]

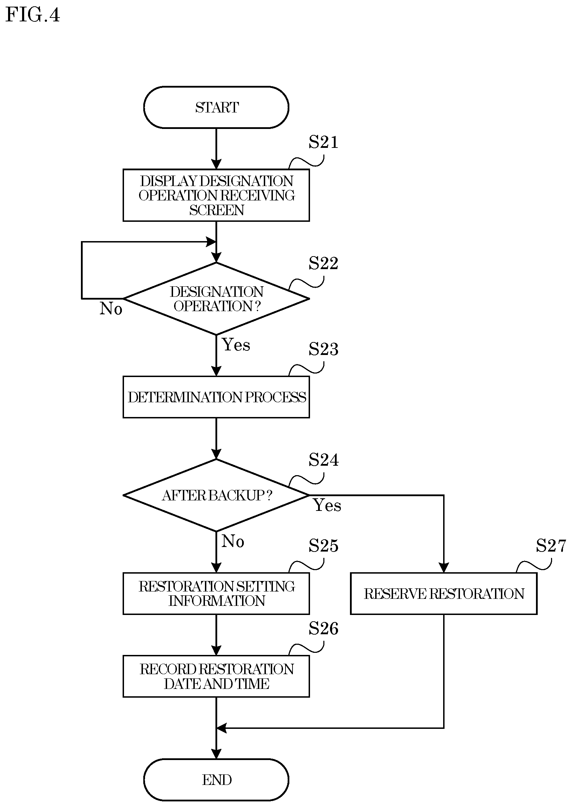

Hereinafter, with reference to FIG. 4, an example of a procedure of the restoration control process executed by the main control portion 18 in the image forming apparatus 1 and the remaining part of the recording method according to the present disclosure will be described.

Note that in a case in which the calling operation is received on the operation display portion 15, the main control portion 18 executes the restoration control process.

### <Step S21>

First, in step S21, the main control portion 18 causes the operation display portion 15 to display the designation operation receiving screen. The process of step S21 is executed by the reception processing portion 53 of the main control portion 18.

### <Step S22>

In step S22, the main control portion 18 determines whether or not the designation operation has been received on the designation operation receiving screen.

Here, when the main control portion 18 determines that the designation operation has been received (YES in S22), the main control portion 18 moves the processing to step S23. In addition, in a case where the designation operation has not been received (NO in S22), the main control portion 18 waits for reception of the designation operation in step S22.

### <Step S23>

In step S23, the main control portion 18 determines whether the last restoration date and time of the setting information recorded in the designated device designated by the designation operation is later than the backup date and time of the setting information to be restored to the designated device. The process of step S23 is executed by the determination processing portion 56 of the main control portion 18.

### <Step S24>

In step S24, the main control portion 18 switches to the next process depending on the result of the process in step S23. More specifically, in a case in which the main control portion 18 determines in the process of step S23 that the last restoration date and time of the setting information recorded in the designated device designated by the designation operation is later than the backup date and time of the setting information to be restored to the designated device (YES in S24), the main control portion 18 moves the processing to step S27. In addition, in the process of step S23, in a case in which it is determined that the last restoration date and time of the setting information recorded in the designated device designated by the designation operation is not later than the backup date and time of the setting information to be restored to the designated device (NO in S24), the main control portion 18 moves the processing to step S25.

### <Step S25>

In step S25, the main control portion 18 restores the setting information corresponding to the designated device, which has been backed up in advance, to the designated device. The process of step S25 is an example of a restoration step according to the present disclosure, and is executed by the restoration processing portion 54 of the main control portion 18.

More specifically, in a case in which the designated device is the second optional device 3, the main control portion 18 executes the third restoration process. In addition, in a case in which the designated device is the first optional device 2, the main control portion 18 executes the second restoration process. Moreover, in a case in which the designated device is the engine control portion 17, the main control portion 18 executes the first restoration process.

### <Step S26>

In step S26, the main control portion 18 records the date and time of the process in step S25 (restoration date and time) in the designated device. The process of step S26 is an example of a recording step according to the present disclosure, and is executed by the first recording processing portion 55 of the main control portion 18.

More specifically, in a case in which the designated device is the second optional device 3, the main control portion 18 records the date and time of the process of step S25 in the third restoration date and time recording area of the second optional device 3. In addition, in a case in which the designated device is the first optional device 2, the main control portion 18 records the date and time of the process of step S25 in the second restoration date and time recording area of the first optional device 2. Moreover, in a case in which the designated device is the engine control portion 17, the main control portion 18 records the date and time of the process of step S25 in the first restoration date and time recording area of the engine control portion 17.

### <Step S27>

In step S27, the main control portion 18 reserves the restoration of the setting information to the designated device. The process of step S27 is executed by the reserve processing portion 57 of the main control portion 18.

More specifically, the main control portion 18 causes the operation display portion 15 to display the selection operation receiving screen including the message. Thus, it is possible to prevent the setting information of the designated device from being overwritten with older information against the user's will when the restoration date and time of the last setting information recorded in the designated device designated by the designation operation is later than the backup date and time of the setting information to be restored to the designated device.

In this way, in the image forming apparatus 1, the restoration date and time when the setting information is restored by the restoration processing portion 54 is recorded in the optional device 4 where the setting information is restored. Thus, it is possible that in a case in which the optional device 4 with the restored setting information is attached to another image forming apparatus, the other image forming apparatus can recognize the restoration date and time when the setting information was restored.

Note that the main control portion 18 may display on the operation display portion 15, in response to user operation on the operation display portion 15, the last restoration date and time of the third setting information recorded in the third restoration date and time recording area of the second optional device 3, the last restoration date and time of the second setting information recorded in the second restoration date and time recording area of the first optional device 2, and the last restoration date and time of the first setting information recorded in the first restoration date and time recording area of the engine control portion 17.

In addition, in response to a user operation on the operation display portion 15, the main control portion 18 may display on the operation display portion 15 the last backup date and time of the third setting information recorded in the third backup date and time recording area of the first optional device 2, the last backup date and time of the second setting information recorded in the second backup date and time recording area of the engine control portion 17, and the last backup date and time of the first setting information recorded in the first backup date and time recording area of the main control portion 18.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image forming apparatus (1) to which an optional device (4) that stores setting information is connected;
the image forming apparatus (1), comprising:
a backup processing portion (51) configured to back up the setting information of the optional device (4) connected to the image forming apparatus (1) in a storage portion provided outside the optional device (4);
a restoration processing portion (54) configured to restore the setting information corresponding to the optional device (4) connected to the image forming apparatus (1) that has been backed up in advance by the backup processing portion (51) to the optional device (4); and
a first recording processing portion (55) configured to record a restoration date and time when the setting information is restored by the restoration processing portion (54) in the optional device (4) to which the setting information is restored.

2. The image forming apparatus (1) according to claim 1, further including:
a second recording processing portion (52) configured to record a backup date and time when the backup processing portion (51) backs up the setting information;
a determination processing portion (56) configured to determine, before the restoration processing portion (54) restores the setting information to the optional device (4), whether or not the last restoration date and time of the setting information recorded in the optional device (4) is later than the backup date and time of the setting information to be restored to the optional device (4); and
a reserve processing portion (57) configured to reserve restoration of the setting information to the optional device (4) by the restoration processing portion (54) when the determination processing portion (56) determines that the last restoration date and time of the setting information recorded in the optional device (4) is later than the backup date and time of the setting information to be restored to the optional device (4).

3. The image forming apparatus (1) according to claim 2, wherein
the optional devices (4) include a first optional device (2) communicably connected to the image forming apparatus (1), and a second optional device (3) communicably connected to the image forming apparatus (1) via the first optional device (2);
the storage portion includes a first storage portion (17A2) provided in the image forming apparatus (1) and a second storage portion (21A2) provided in the first optional device (2);
the backup processing portion (51) backs up the setting information of the first optional device (2) to the first storage portion (17A2), and backs up the setting information of the second optional device (3) to the second storage portion (21A2) of the first optional device (2) connected to the second optional device (3); and
the second recording processing portion (52), in a case in which the backup processing portion (51) backs up the setting information of the second optional device (3) to the second storage portion (21A2) of the first optional device (2) connected to the second optional device (3), records the backup date and time of the setting information in the first optional device (2).

4. A recording method executed in an image forming apparatus (1) to which an optional device (4) that stores setting information is connected;
the recording method, including:
a backup step of backing up the setting information of the optional device (4) connected to the image forming apparatus (1) in a storage portion provided outside the optional device (4);
a restoration step of restoring the setting information corresponding to the optional device (4) connected to the image forming apparatus (1) that has been backed up in advance by the backup step to the optional device (4); and
a recording step of recording a restoration date and time when the setting information is restored by the restoration step in the optional device (4) to which the setting information is restored.
